(19) Europäisches Patentamt
European Patent Office
Office européen des brevets

(11) Publication number: 0 132 159 B1

(12) EUROPEAN PATENT SPECIFICATION

(45) Date of publication of patent specification: 21.03.90

(51) Int. Cl.$^5$: E 21 B 33/03, F 16 J 15/10

(21) Application number: 84304924.8

(22) Date of filing: 19.07.84

(60) Divisional application 89107296.9 filed on 19/07/84.

# (54) Wellhead seals.

(30) Priority: 19.07.83 CA 432780

(43) Date of publication of application: 23.01.85 Bulletin 85/04

(45) Publication of the grant of the patent: 21.03.90 Bulletin 90/12

(84) Designated Contracting States: AT DE GB IT

(56) References cited:
GB-A-1 068 721
GB-A-2 067 235
GB-A-2 099 046
GB-A-2 102 898
US-A-2 426 371
US-A-3 291 490
US-A-4 008 898
US-A-4 381 114

(73) Proprietor: Barber Industries Ltd.
Suite 2900 595 Burrard Street
Vancouver, British Columbia,Canada V7X 1J5 (CA)

(72) Inventor: Johnson, Clarence William
1815 Palliser Drive S.W.
Calgary Alberta (CA)

(74) Representative: Purvis, William Michael Cameron et al
D. Young & Co. 10 Staple Inn
London WC1V 7RD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 132 159 B1

**Description**

The invention relates to wellhead seals and, more particularly, to wellhead seals used between tubing, well casing and the inside diameters of wellhead fittings.

Casing is used when drilling wells to prevent the drill hole from caving and to preclude undesirable formation fluid movement in the surrounding rock strata. The casing is hung from a casing hanger mounted in a casing head. A "primary" seal is used in the casing hanger to seal and prevent fluid flow between the outside of the casing and the casing head.

The casing continues upwardly from the casing head and is terminated by cutting at an optimal location. The cut end of the casing is generally bevelled to remove sharp edges. Thereafter, a tubing spool is inserted over the end of the casing and attached to the casing head.

Tubing in the well acts as a conduit for the oil, gas or water of the well. It extends from the bottom of the well within the casing and upwardly a distance from the top of the cut casing. A tubing hanger is threaded on the tubing and mounted in the tubing spool. A mating bonnet is connected to the upper end of the tubing spool.

To seal the contents of the well from the primary seal between the casing and the casing head, seals additional to the primary seal are used between the tubing spool and the casing. These seals are known as "secondary" seals. Seals are also used between the tubing hanger and the mating bonnet to prevent fluid flow therebetween.

Problems with existing seals have arisen for various reasons. In one secondary seal, "double-lipped" seals in a "dog bone" type shape are used. If the end of the casing is not well bevelled or if considerable installation care is not taken, lips of the secondary seal in the tubing spool or in a bushing mounted within the tubing spool may contact the bevelled end of the casing and be damaged or jammed into the corner of the seal retaining recess and protrude into the space between the outside of the casing and the inside of the bushing. This protrusion of the lips may prevent further assembly or the lips themselves may be sheared off when the assembly is forced.

In another type of secondary seal, the seal is formed for axial pressure between the casing and the bushing only by pressurizing the outer circumferential surface with a viscous plastics fluid injection. Further, such seals cannot convey the viscous fluid through the seal to another seal situated at a radially inwardly location.

Patent Specification GB-A-2 099 046 discloses a casing seal in a bushing recess, the casing seal having cylindrical inside and outside surfaces located generally on the inside and outside diameters of the seal with the cylindrical outside surface defined by a circumferentially centrally located groove flanked by outwardly extending flanges.

According to one aspect of the invention, there is provided a wellhead sealing system comprising a casing, a tubing spool around the casing, a bushing between the tubing spool and the casing, a first bushing recess, a first tubing spool recess, a first casing seal in the first bushing recess and a first bushing seal in the first tubing spool recess; wherein the first casing seal has cylindrical inside and outside surfaces located generally at the inside and outside diameters of the seal, respectively, and the cylindrical outside surface is defined by a circumferential centrally located groove flanked by outwardly extending flexible retaining flanges;

characterised in that a radially inwardly extending convex central protuberance is provided on the cylindrical inside surface between cylindrical flat surface areas which extend axially outwardly from the convex central protuberance into first transition areas extending to the respective end surfaces and that the flanges are axially outwardly extending flexible retaining flanges which form second transition areas between the cylindrical outside surface and each respective end surface.

The invention is diagrammatically illustrated by way of example with reference to the accompanying drawings in which:

Figure 1 is a diagrammatic partially cutaway cross-sectional view of a wellhead assembly including a wellhead sealing system according to the invention;

Figure 2 is a partial enlarged cross-sectional view of the hardware surrounding the top of the casing as shown in Figure 1;

Figure 3 is an enlarged cross-sectional view of the portion indicated at Area III in Figure 2; and

Figure 4 is an enlarged cross-sectional view of the portion indicated at Area IV in Figure 2.

In the following description, it will be understood that the terms "radial", "axial," "inwardly", and "outwardly" are used with reference to the directions as viewed in Figure 1.

Referring to the drawings, a wellhead is shown generally at 10 in Figure 1. Tubing 11 and casing 12 extend upwardly from the drill hole into the wellhead 10. A large portion of the weight of the casing 12 is borne by a casing hanger generally denoted 13. The casing hanger 13 is mounted in a casing head 14 and a primary seal 15 seals between the casing 12 and the casing head 14.

A tubing spool 16 is mounted on the top of the casing head 14. A ring gasket 17 acts between the flanges of the tubing spool 16 and the casing head 14.

The tubing 11 has a threaded end portion 18 and a tubing hanger 19 is connected thereto and mounted in the upper end of the tubing spool 16. A mating bonnet 20 is connected to the tubing spool 16. A ring gasket 21 acts between the tubing hanger 19 and the mating bonnet 20.

As more clearly shown in Figure 2, a bushing 22 is utilized when the outside diameter of the casing 12 is relatively smaller than the inside diameter of the tubing spool 16. The bushing 22 is mounted within the tubing spool 16 and is positioned between the casing 12and the tubing spool 16. A first casing seal is shown generally at 23, is retained in a bushing recess 24 in the bushing 22 and acts between the bushing 22 and the casing 12. A first bushing seal is shown generally at 25, is retained in a tubing spool recess 26 in the tubing spool 16 and acts between the bushing 22 and the tubing spool 16. Both the first casing and the bushing seals 23, 25, respectively, are duplicated at a lower position by seals 23a, 25a in the bushing 22 and the tubing spool 16 respectively.

The first casing seal 23 is shown in more detail in Figure 3. It is known colloquially as a "garter spring" or "GS" type seal and is made from flexible elastomer material. The first casing seal 23 comprises cylindrical inside and outside surfaces shown generally at 27, 28, respectively, which surfaces are located generally at the inside and outside diameters of the first casing seal 23. The cylindrical inside surface 27 has a convex central protuberance 29 thereon which extends radially inwardly from the cylindrical inside surface 27. Cylindrical flat surface areas 30 each extend axially outwardly from the convex central protuberance 29 into first transition areas 31 which extend to respective end surfaces 32. The cylindrical outside surface 28 is defined by a circumferential centrally located groove 33 flanked by axially outwardly extending flexible retaining flanges 34 which form second transition areas between the circumferential centrally located groove 33 and the end surfaces 32.

A pair of spring means, namely coiled or "garter" springs 35 extend around the inside circumference of the first casing seal 23, one adjacent each of the first transition areas 31. The coiled springs 35 protect the first transition areas 31 and lend rigidity to the casing seal 23.

The first bushing seal 25 is shown in more detail in Figure 4. It is known colloquially as a "B" type seal and is also made from flexible elastomer material. The shape of the bushing seal 25 is generally similar to that of the casing seal 23 and both are interchangeable in the same recess. However, whereas the casing seal 23 has the convex central protuberance 29 on the cylindrical inside surface 27, the central portion of the bushing seal 25 is a circumferential central recess or cavity 36 with a radially open inwardly extending circumferential entrance area 37. A further difference between the casing seal 23 and the bushing seal 25 is that the bushing seal 25 has a plurality of radially extending peripheral passageways 38 between an outside surface 39 and the cavity 36 which allow for radial injection of plastic material when it is needed. Flexible retaining lips 40 extend axially outwardly from and flank the cavity 36 and flexible retaining flanges 52 are provided at the radially and axially outer corners.

In operation, it will first be assumed that the outer diameter of the casing 12 is relatively smaller than the inside diameter of the tubing spool 16. In this case, the bushing 22 is required between the casing 12 and the tubing spool 16. It will further be assumed that the first casing seal 23 is a GS type seal as shown in Figure 3 and that the bushing seal is a B type seal 25 as shown in Figure 4.

Both the GS type casing seal 23 and the B type bushing seal 25 are continuous and are, therefore, snap fitted into their respective recesses 24, 26 in the bushing 22 and the tubing spool 16, respectively. After the casing 12 is cut to the appropriate length above the casing head 14, the tubing spool 16 together with the bushing 22, GS type casing seal 23 and B type bushing seal 25 will be installed over the casing 12 and connected to the flange of the casing head 14. If a bevelled edge 50 (Figure 2) of the casing 12 strikes one of the first transition areas 31 of the casing seal 23 during installation, the casing seal 23 will be guided over the casing by that transition area 31 and is not likely to be damaged or forced outside the bushing recess 24 because of the configuration of the first transition area 31 and the increased strength provided by the adjacent garter spring 35. As the seal 23 moves downwardly over the casing 12, the convex central protuberance 29 provides initial contact pressure against the casing 12 and sets the initial seal between the casing 12 and the bushing 22. In addition, because of a certain degree of allowable radial movement between the casing seal 23 and the inside diameter of the recess 24 (Figure 2), the casing seal 23 will maintain the initial seal with the casing 12 despite relative movement of the casing 12 as installation proceeds.

The B type bushing seal 25 is used between the tubing spool 16 and the bushing 22 because both the bushing 22 and the tubing spool 16 are manufactured with closer tolerance and surface finish control than is possible with the fit between the casing 12 and the bushing 22 and, accordingly, the possibility of the bushing seal 25 extruding from the tubing spool recess 26 or being damaged during installation is minimal.

After the installation of the tubing spool 16, the tubing hanger 19 is threaded onto the complementary threaded end portion 18 of the tubing 11 and is mounted within the tubing spool 16. The ring gasket 21 is positioned on the upper end of the tubing spool 16 and the mating bonnet 20 is mounted thereon. The mating bonnet 20 has two B type bushing seals 25b installed in suitable bonnet recesses 51, again because of the tolerance and machining control possible between the tubing hanger 19 and the mating bonnet 20.

When axial well pressure is applied by fluid or gas between the casing 12 and the bushing 22 to the casing seal 23, the convex central protuberance 29 will prevent the gas or fluid from passing and it will flow around the seal 23 displacing the upstream flexible retaining flange 34 and permitting the fluid to flow into the groove 33. This forces the surface areas 30 against the casing 12 and also forces the downstream flexible retaining flange 34 and forces the end surface 32 adjacent thereto against the end wall of the bushing recess 24 thus completing the sealing effect.

When axial well pressure is applied to the bushing seal 25, the fluid or gas will initially flow into the cavity 36 (Figure 4) and through the peripheral passageways 38 which will force the flexible retaining lips 40 to constrict inwardly against the casing 12 and the flexible retaining flanges 52 to move axially against the end walls of the tubing spool recess 26 thus completing the sealing effect.

Plastics material may be injected to further enchance sealing in the event that the surface of the casing 12 is damaged or deeply scratched. The plastics is injected through connections 53, 54 in the tubing spool 16 (Figure 2). The injected plastics passes from the connections 53, 54 and associated passageways 55, 56, into each tubing spool recess 26, and through the peripheral passageways 38 in each bushing seal 25. Thence, the plastics flows into the radial periphery in each bushing recess 24 outside each casing seal 23. The pressure from the injected plastics material provides a strong radial force on the casing seal 23 and also acts against the flexible retaining flanges 34. The plastics will similarly act within the cavity 36 and around the outside surface 39 of the bushing seal 25, forcing the flexible retaining lips 40 to constrict inwardly against the casing 12 and forcing the flexible retaining flanges 52 against the end walls of the tubing spool recess 26 thus enhancing the sealing effect.

When the outside diameter of the casing 12 closely matches the inside diameter of the tubing spool 16, a bushing will not be required and each tubing spool recess 26 will carry a respective casing seal 23 which will act directly between the tubing spool 16 and the casing 12.

A type B bushing seal 25b may be mounted in each of the bonnet recesses 51 in the mating bonnet 20 (Figure 1). This is appropriate since the seal 25b is bridging the gap existing between the tolerance controlled surfaces of the mating bonnet 20 and the tubing hanger 19. If it is desired to use plastics injection to enhance the sealing, the plastics is injected through connections 57, 58 and respective passageways 59, 60. The plastics passes into the B type bushing seal 25b and, as earlier described, the flexible retaining lips 40 and the flanges 52 are pressed against the outer diameter of the tubing hanger 19 and against the end walls of the bonnet recess 51 in the mating bonnet 20 thus creating an enhanced sealing effect.

**Claims**

1. A wellhead sealing system comprising a casing (12) a tubing spool (16) around the casing (12), a bushing (22) between the tubing spool (16) and the casing (12), a first bushing recess (24), a first tubing spool recess (26), a first casing seal (23) in the first bushing recess (24) and a first bushing seal (25) in the first tubing spool recess (26); wherein the first casing seal (23) has cylindrical inside (27) and outside (28) surfaces located generally at the inside and outside diameters of the seal, respectively, and the cylindrical outside surface (28) is defined by a circumferential centrally located groove (33) flanked by outwardly extending flexible retaining flanges (34);

characterised in that a radially inwardly extending convex central protuberance (29) is provided on the cylindrical inside surface (27) between cylindrical flat surface areas (30) which extend axially outwardly from the convex central protuberance (29) into first transition areas (31) extending to the respective end surfaces (32) and that the flanges (34) are axially outwardly extending flexible retaining flanges which form second transition areas between the cylindrical outside surface (28) and each respective end surface (32).

2. A wellhead sealing system according to claim 1, characterised in that the first casing seal (23) further includes spring means (35) extending around the inside circumference of the seal adjacent each of the first transition areas (31).

3. A wellhead sealing system according to claim 1 or claim 2, characterised in that the first bushing seal (25) comprises an outside surface (39) located generally at the outside diameter of the bushing seal (25), a circumferential central recess (36), a radially open inwardly extending circumferential entrance area (37) to the recess (36), and a plurality of radially extending peripheral passageways (38) between the outside surface (39) of the bushing seal (25) and the recess (36).

4. A wellhead sealing system according to any one of claims 1 to 3, characterised by a second bushing recess (24) in the bushing (22), a second tubing spool recess (26) in the tubing spool (16), a second casing seal (23) in the second bushing recess (24) and a second bushing seal (25) in the second tubing spool recess (26).

5. A wellhead sealing according to claim 4, characterised in that each of the second bushing and the tubing spool recesses (24, 26) are substantially identical to each of the first bushing and tubing spool recesses (24, 26), respectively, and each of the second casing and bushing seals (23, 25) are substantially identical to the first casing and bushing seals (23, 25), respectively.

**Patentansprüche**

1. Abdichtsystem eines Bohrlochkopfes mit einem Gehäuse (12), einer um das Gehäuse (12) herum befindlichen Rohrleitungsspule (16), einer Hülse (22) zwischen der Rohrleitungsspule (16) und dem Gehäuse (12), einer ersten Ausnehmung (24) in der Hülse, einer ersten Ausnehmung (26) in der Rohrleitungsspule, einer ersten Gehäuseabdichtung (23) in der ersten Hülsenausnehmung (24) und einer ersten Hülsenabdichtung (25) in der ersten Ausnehmung (26) in der Rohrleitungsspule; wobei die erste Hülsenabdichtung (23) zylindrische Innen- (27) und Außenoberflächen (28) aufweist, die im allgemeinen am Innen- bzw. Außendurchmesser der Abdichtung angeordnet sind, und die zylindrische Außenoberfläche (28) durch eine mittig angeordnete Umfangsnut (33) gebildet ist, die von sich auswärts erstreckenden, flexiblen Halteflanschen (34) flankiert ist.

dadurch gekennzeichnet, daß ein sich radial einwärts erstreckender, konvexer, mittiger Vorsprung (29) auf der zylindrischen Innenoberfläche (27) zwischen zylindrischen, flachen Oberflächenbereichen (30) vorgesehen ist, die sich axial auswärts von dem konvexen, mittigen Vorsprung (29) in erste Übergangsbereiche (31) erstrecken, die sich zu den entsprechenden Endoberflächen (32) erstrecken, und daß die Flansche (34) axial nach außen sich erstrekkende flexible Halteflansche sind, welche zweite Übergangsbereiche zwischen der zylindrischen Außenoberfläche (28) und jeder betreffenden Endoberfläche (32) bilden.

2. Abdichtsystem eines Bohrlochkopfes nach Anspruch 1, dadurch gekennzeichnet, daß die erste Gehäusedichtung (23) ferner Federmittel (35) aufweist, die sich um den Innenumfang der Dichtung neben jedem der ersten Übergangsbereiche (31) erstrecken.

3. Abdichtsystem eines Bohrlochkopfes nach Anspruch 1 oder Anspruch 2, dadurch gekennzeichnet, daß die erste Hülsenabdichtung (25) eine Außenoberfläche (39) aufweist, die im allgemeinen am Außendurchmesser der Hülsenabdichtung (25) angeordnet ist, eine mittige Umfangsausnehmung (36), einen radial offenen, sich nach einwärts erstreckenden Umfangseingangsbereich (37) zu der Ausnehmung (36) und eine Mehrzahl von sich radial erstreckenden Umfangsdurchgängen (38) zwischen der Außenoberfläche (39) der Hülsendichtung (25) und der Ausnehmung (36) aufweist.

4. Abdichtsystem eines Bohrlochkopfes nach einem der Ansprüche 1 bis 3, gekennzeichnet durch eine zweite Hülsenausnehmung (24) in der Hülse (22), eine zweite Ausnehmung (26) in der Rohrleitungsspule (16), eine zweite Gehäuseabdichtung (23) in der zweiten Hülsenausnehmung (24) und durch eine zweite Hülsenabdichtung (25) in der zweiten Ausnehmung (26) in der Rohrleitungsspule.

5. Abdichtsystem eines Bohrlochkopfes nach Anspruch 4, dadurch gekennzeichnet, daß jede der zweiten Hülsen- bzw. Rohrleitungsspulenausnehmungen (24, 26) im wesentlichen identisch zu jeder der ersten Hülsenb- zw. Rohrleitungsspulenausnehmungen (24, 26) ist und jede der zweiten Gehäuse- bzw. Hülsenabdichtungen (23, 25) im wesentlichen identisch zu der ersten Gehäusebzw. Hülsenabdichtung (23, 25) ist.

**Revendications**

1. Un système d'étanchéité pour tête de puits, comportant un cuvelage (12), un moyeu de tubage (16) autour du cuvelage (12), un manchon (22) entre le moyeu de tubage (16) et le cuvelage (12), une première gorge de manchon (24), une première gorge de moyeu de tubage (26), un premier joint de cuvelage (23) dans la première gorge de manchon (24) et un premier joint de manchon (25) dans la première gorge de moyeu de tubage (26); où le premier joint de cuvelage (23) présente des surfaces cylindriques intérieure (27) et extérieure (28) situées généralement sur les diamètres intérieur et extérieur du joint, respectivement, et la surface cylindrique extérieure (28) est définie par une rainure circonférentielle (33) située centralement, et flanquée de rebords de maintien (34) souples, s'étendant vers l'extérieur;

caractérisé en ce qu'une saillie centrale (29) convexe, s'étendant radialement vers l'intérieur, est ménagée sur la surface cylindrique intérieure (27) entre des surfaces cylindriques droites (30) qui s'étendent axialement vers l'extérieur depuis la saillie centrale convexe (29) en des surfaces de transition (31) s'étendant jusqu'à des surfaces d'extrémité (32) respectives, et en ce que les rebords (34) sont des rebords de maintien souples s'étendant axialement vers l'extérieur qui forment des secondes surfaces de transition entre la surface cylindrique extérieure (28) et chacune des surfaces d'extrémité respective.

2. Un système d'étanchéité pour tête de puits selon la revendication 1, caractérisé en ce que le premier joint de cuvelage (23) comporte en outre des moyens de ressorts (35) s'étendant autour de la circonférence intérieure du joint, chacun adjacent aux premières surfaces de transition (31).

3. Un système détanchéité pour tête de puits selon la revendication 1 ou la revendication 2, caractérisé en ce que le premier joint de manchon (25) comporte une surface extérieure (39) située généralement sur le diamètre extérieur du joint de manchon (25) une gorge circonférentielle (36) centrale, une surface d'entrée (37) ouverte radialement vers l'intérieur jusqu'à la gorge (36) et une pluralité de passages périphériques (38) s'étendant radialement entre la surface extérieure (39) du joint de manchon (25) et la gorge (36).

4. Un système d'étanchéité pour tête de puits selon l'une quelconque des revendications 1 à 3, caractérisé par une seconde gorge de manchon (24) dans le manchon (22), une seconde gorge de moyeu de tubage (26) dans le moyeu de tubage (16), un second joint de cuvelage (23) dans la seconde gorge de manchon (26) et un second joint de manchon dans la seconde gorge de moyeu de tubage.

5. Un système d'étanchéité de tête de puits selon la revendication 4, caractérisé en ce que chacune des secondes gorges (24, 26) de manchon et de moyeu de tubage est sensiblement identique à chacune des premières gorges (24, 26) de manchon et de moyeu de tubage, et chacun des seconds joints (23, 25) de cuvelage et de manchon est sensiblement identique au premier joint (23, 25) de cuvelage et de manchon, respectivement.

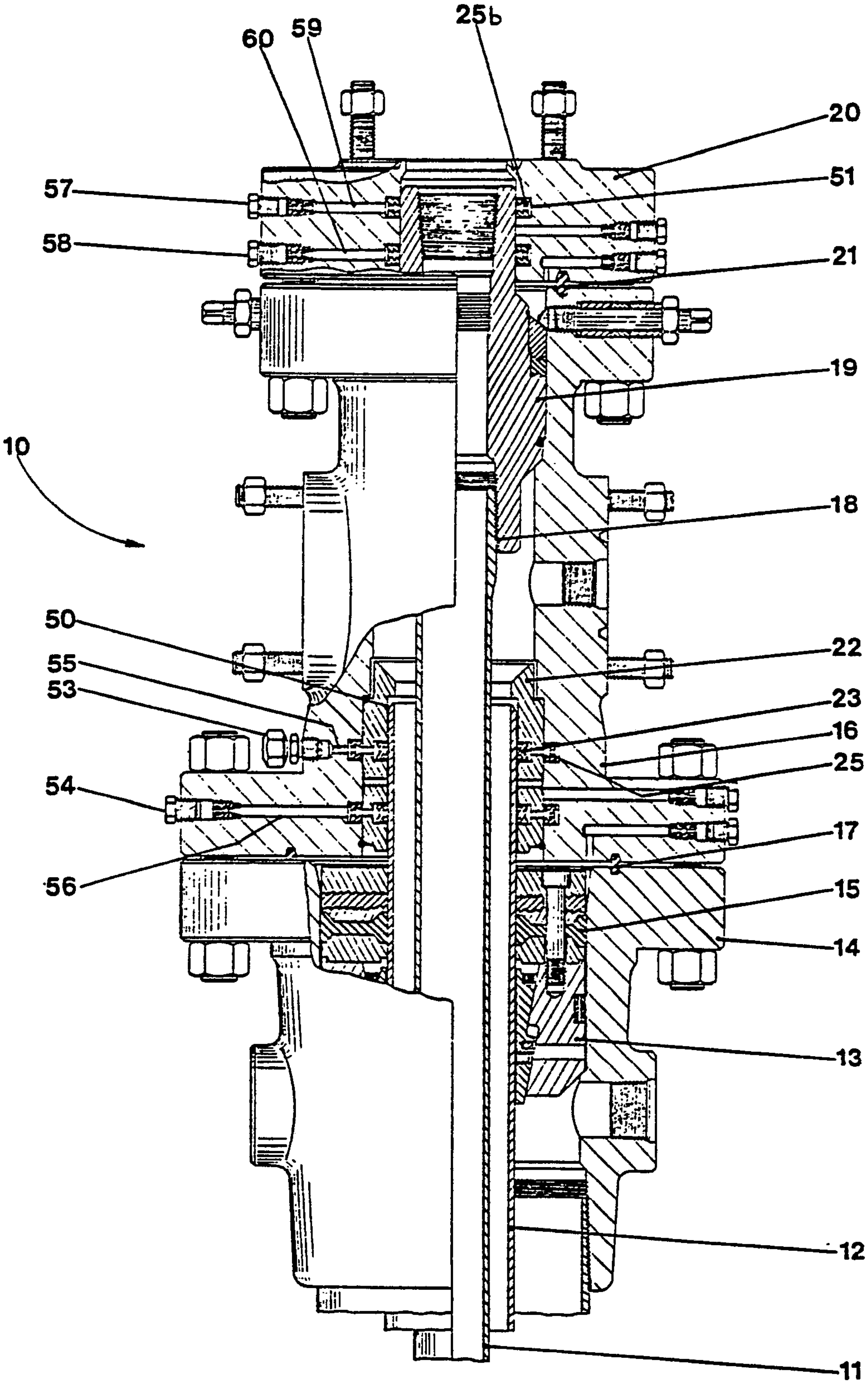
25b
60
59
20
57
51
58
21
19
10
18
50
22
55
53
23
16
25
54
17
56
15
14
13
12
11

FIGURE I

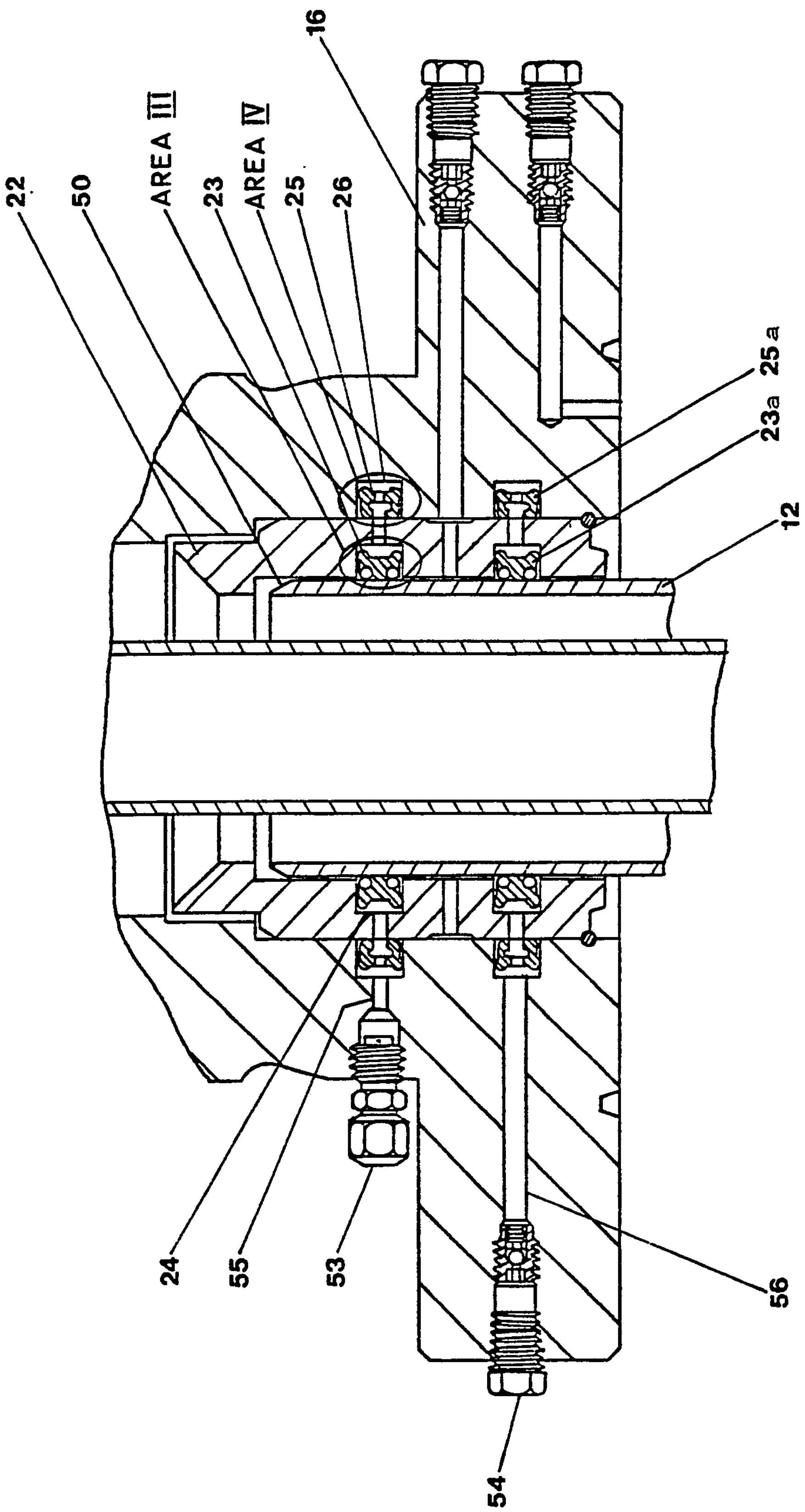


FIGURE 2

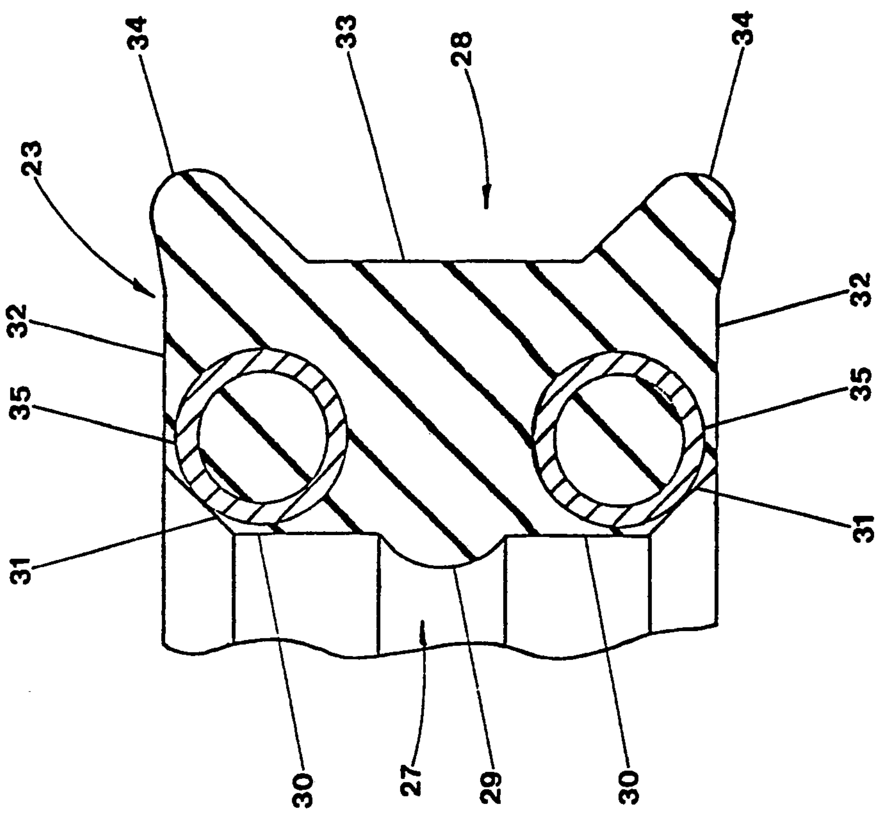


FIGURE 3

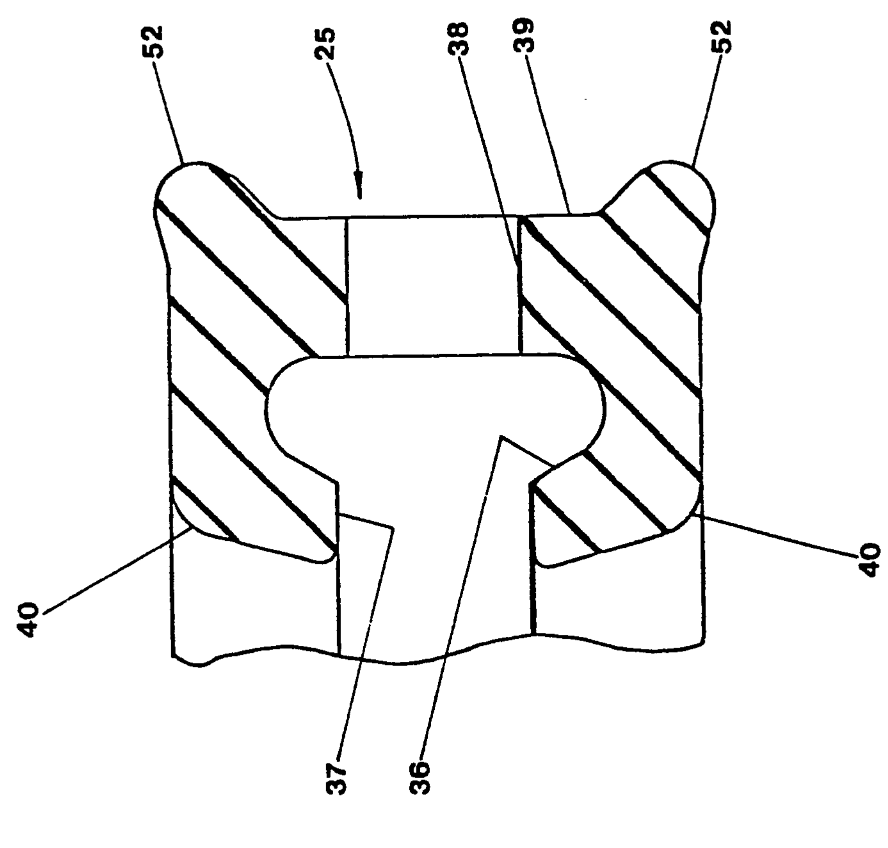


FIGURE 4